Europäisches Patentamt

(19) European Patent Office

Office européen des brevets

(11) Veröffentlichungsnummer: **0 017 163**
**B1**

(12) **EUROPÄISCHE PATENTSCHRIFT**

(45) Veröffentlichungstag der Patentschrift:
**18.05.83**

(51) Int. Cl.³: **H 01 H 1/58**, H 01 R 4/70

(21) Anmeldenummer: **80101613.0**

(22) Anmeldetag: **26.03.80**

(54) **Abdeckung der Anschlüsse von elektrischen Schaltgeräten.**

(30) Priorität: **10.04.79 DE 2914507**

(43) Veröffentlichungstag der Anmeldung:
**15.10.80 Patentblatt 80/21**

(45) Bekanntmachung des Hinweises auf die Patenterteilung:
**18.05.83 Patentblatt 83/20**

(84) Benannte Vertragsstaaten:
**CH FR GB SE**

(56) Entgegenhaltungen:
**US-A-2 636 065**
**US-A-2 727 965**
**US-A-2 727 966**
**US-A-2 834 829**
**US-A-3 657 503**

(73) Patentinhaber: **SIEMENS AKTIENGESELLSCHAFT,
Berlin und München Wittelsbacherplatz 2,
D-8000 München 2 (DE)**

(72) Erfinder: **Paul, Klaus Dieter, Schillerstrasse 22,
D-8458 Sulzbach-Rosenberg (DE)**
Erfinder: **Harbauer, Werner, Dipl.-Ing., Flurstrasse 57,
D-8460 Schwandorf (DE)**
Erfinder: **Hannich, Joachim,
Erasmus-Grasser-Strasse 23, D-8450 Amberg (DE)**

## Abdeckung der Anschlüsse von elektrischen Geräten

Die Erfindung bezieht sich auf eine aus Isolierstoff bestehende Klemmenabdeckung, die über Klemmschrauben mit der Klemme verbunden ist und deren Mittelteil das Vorderteil und dessen Seitenteile die Seiten der Klemmschraube abdecken, wobei die Abdeckung am freien Gewindeschaft der Klemmschraube gehalten ist.

Bei einer bekannten Abdeckung für Übergangsklemmen der obengenannten Art (US-PS 2 636 065) ist die die Kabelschuhe von Anschlussleitungen verbindende Klemmschraube von einer hutförmigen Abdeckung umgriffen, die mit ihrem Deckteil auf das Ende der Klemmschraube gedrückt ist. Die die Leitung klemmenden Teile der Kabelschuhe sind durch seitliche Schlitze in der hutförmigen Abdeckung herausgeführt und sind aussen weder gegen Berührung noch gegen Spannungsüberschläge geschützt. Ausserdem ist die Abdeckung ohne Zuhilfenahme von Werkzeugen von unberechtigten Personen abzuziehen.

Zur Abdeckung der Anschlüsse von elektrischen Geräten ist es bei kleineren Schaltgeräten (DE-GM 7 415 932) üblich, diese Abdeckungen mit an das Gerät anzuformen. Um die seitlich überstehenden Teile der Festkontakte abdecken zu können ist es seiterhin bekannt (DE-GM 7 418 345), seitlich Abdeckungen auf das elektromagnetische Schaltgerät aufzuschnappen, die speziell das Eindringen von Staub in den Schaltraum verhindern sollen. Bei grösseren Schaltgeräten ist diese Ausführungsform insbesondere bei Verwendung von Anschlussleitungen grösseren Querschnittes, die aufgrund ihrer schlechten Beweglichkeit praktisch nicht in Öffnungen des Schaltgerätes eingeschoben werden können, sondern bei denen beispielsweise Anschlüsse mit Kabelschuhen oder Schienen notwendig sind, nicht anwendbar.

Eine weiterhin bekannte Abdeckung (US-PS 2 727 965) ist zur gleichzeitigen Abdeckung von drei Anschlussklemmen eines Selbstschalters ausgebildet, wobei die Klemmen bereits durch Trennwände geschützt im Schalter untergebracht sind, so dass lediglich noch die Anschlussschraube von der Frontseite her berührt werden kann. Der Kopf der mittleren Anschlussschraube wird hierbei von einem rohrförmigen, geschlitzten Teil der Abdeckung übergriffen, so dass die Abdeckung durch Friktion zwischen diesem Rohr und dem Schraubenkopf gehalten wird. Diese Abdeckung ist somit speziell für einen bestimmten Schalter gefertigt und nur bei diesem Schalter verwendbar. Sie ist ohne jegliches Werkzeug, d.h. von jeder beliebigen Person, entfernbar, so dass eine sichere Abdeckung nicht gewährleistet werden kann.

Durch die Erfindung soll eine einfach herzustellende Abdeckung der obengenannten Art geschaffen werden, die im Bedarfsfall bei elektrischen Schaltgeräten der verschiedensten Art ohne grossen Montageaufwand eingesetzt werden kann, jedoch nicht schon durch einfaches Abziehen entfernt werden kann und einen weitgehenden Schutz gegen Spannungsüberschläge bietet.

Dies wird bei einer Abdeckung der obengenannten Art auf einfache Weise dadurch erricht, dass die Klemme als Anschluss eines mehrphasigen elektrischen Schaltgerätes ausgebildet ist und die Abdeckung U-Profil aufweist und den gesamten Anschluss phasenüberschlägeverhindernd abdeckt und dass die Abdeckung über eine Kunststoffhutmutter nur mit einem Werkzeug lösbar verbunden ist.

Die Abdeckungen sind einerseits für Kabelschuhe und anderseits für Schienen, die angeschlossen werden sollen, geeignet. Die Abdeckung verhindert einen Kurzschluss zwischen zwei nebeneinanderliegenden Phasen, beispielsweise durch ein herunterfallendes Werkzeug. Die Kunststoffhutmuttern können so ausgebildet sein, dass ein Aufschnappen oder Aufschrauben auf das Gewinde der Anschlussbolzen möglich ist, zum Entfernen ist jedoch ein Verdrehen der Hutmuttern mittels Werkzeug notwendig. Da die Klemmschrauben der Anschlüsse der verschiedenen Gerätegrössen genormt sind, sind die Abdeckungen nicht an einen Gerätetyp gebunden. Die Kunststoffhutmuttern können derart ausgebildet werden, dass sie auf mehrere Gewindegrössen aufgedreht werden können. Um auch bei aufgesetzter Abdeckung Spannungsmessungen an den Anschlüssen vornehmen zu können ist es vorteilhaft, wenn das Mittelstück der Abdeckung eine Aussparung bzw. einen Kanal zur Einführung einer Spannungsprüfspitze hat. Um möglichst alle Abdeckungen einer Anschlussseite gleichzeitig montieren zu können ist es vorteilhaft, wenn die den drei Phasen eines elektrischen Schaltgerätes zugeordneten Abdeckungen dieser Anschlussseite auf einer quer zu den Anschlüssen verlaufenden Schiene aufgereiht sind. Die Schiene kann mit einem Raster oder Mass versehen sein, um die Abdeckungen in einem dem jeweiligen Gerätetyp entsprechenden Abstand festsetzen zu können. Ist am Mittelteil der Abdeckung eine Handhabung dienende Nase angeformt, so ist das Aufsetzen und Abnehmen wesentlich vereinfacht. Bei tieferliegenden Anschlüssen kann beispielsweise mittels einer Kombizange die Nase festgehalten und mittels eines Schraubendrehers die Kunststoffhutmutter gelöst bzw. festgedreht werden.

Um ein nachträgliches kundenseitiges Kürzen der Abdeckungen zu vereinfachen, ist es vorteilhaft, wenn die Abdeckung quer zur Längsrichtung verlaufende Sollbruchkerben hat. Um auch mit einfachen Mitteln die Abdeckungen im Querschnitt der anzuschliessenden Kabel anpassen zu können ist es vorteilhaft, wenn bei Vorhandensein einer Wandung an der Eintrittsseite für die Anschlussleitung an der Innenseite dieser Wandung U-förmig verlaufende Sollbruchkerben ausgebildet sind. Um einerseits ein verliersicheres Einschnappen der Kunststoffhutmuttern in die Abdeckungen und anderseits eine Schnellmontage der Abdeckung durch Aufdrücken der Kunststoffhutmuttern zu ermöglichen, ist es vorteilhaft, wenn die Kunststoffhutmutter an ihrem Umfang in Achsrichtung verlaufende Längsschlitze hat. Hierdurch wird ein Zerstören der Kunststoffhutmutter beim Aufdrehen mittels eines Werkzeuges vermieden, da die durch Schlitzung gebildeten, elastisch nachgiebigen Arme der Kunststoffhutmutter überratschen können. Um ein selbsttätiges Lösen der Kunststoffhutmuttern zu verhindern, ist es vorteilhaft, den Kopf der Kunststoffhutmuttern an der Auflagefläche auf der Abdeckung mit einer Verzahnung zu versehen. Eine entsprechende Verzahnung kann auf der Abdeckung vorgesehen sein.

Anhand der Zeichnung werden Ausführungsbeispiele der Erfindung beschrieben. Es zeigen:

Fig. 1 mit den Klemmschrauben des Schaltgerätes verbindbare Abdeckungen bei einem elektromagnetischen Schaltgerät,

Fig. 2 und 3 Draufsicht und Seitenansicht, zum Teil im Schnitt, einer Abdeckung im vergrösserten Massstab,

Fig. 4 die Stirnseite der Abdeckung, in die die Zuleitung eingeführt wird, in perspektivischer Darstellung,

Fig. 5 die Kunststoffhutmutter in perspektivischer Darstellung,

Fig. 6 die an der Kunststoffhutmutter vorgesehene Verzahnung, ebenfalls in perspektivischer Darstellung.

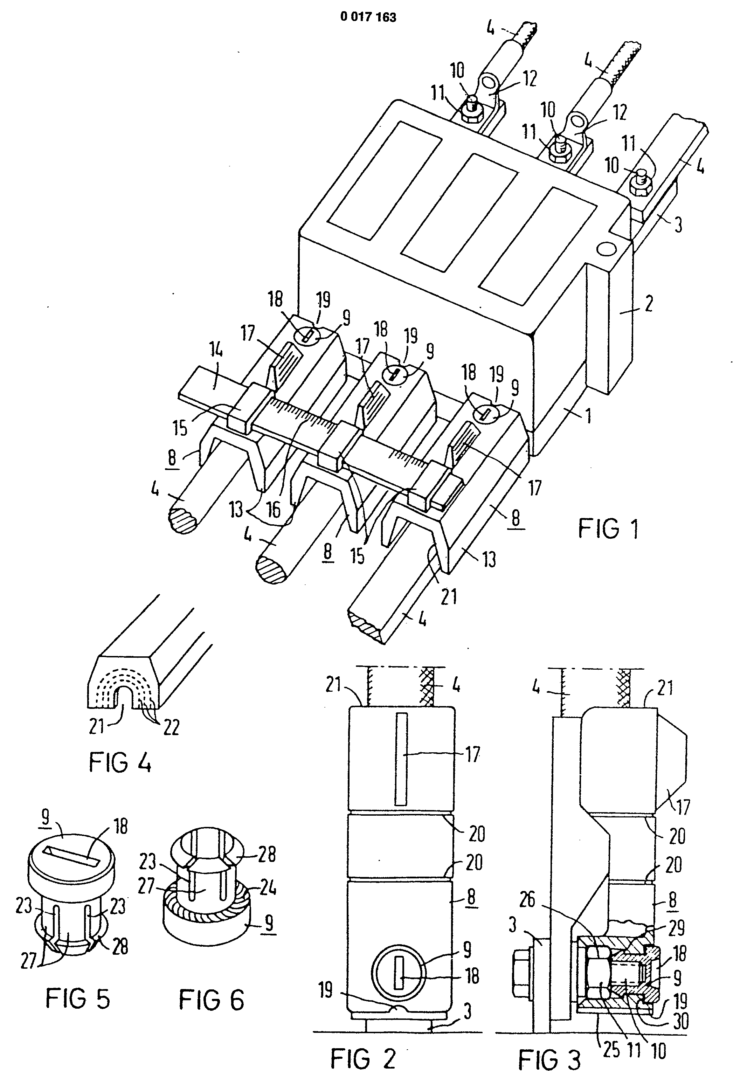

In Fig. 1 sind von einem Schaltgerät Sockel 1, Lichtbogenkammer 2, die Anschlussleiter 3 sowie die Zuleitungen 4 dargestellt, die mit den Anschlussleitern 3 mittels Schraubklemmen verbunden sind. Zur Abdeckung des Anschlussleiters 3 bzw. der Verbindungsstellen Anschlussleiter 3 und Zuleitung 4 dienen die Abdeckungen 8, die über Kunststoffhutmuttern 9 mit den Klemmenschrauben 10 des Schaltgerätes in Verbindung gebracht sind. Die Klemmenschrauben 10 sind auf der einen Seite des Schaltgerätes sichtbar. Dort sind keine Abdeckungen aufgebracht. Auf die Klemmenschrauben 10 sind Muttern 11 aufgeschraubt, die der Verbindung der Anschlussleiter 3 mit den Zuleitungen 4 dienen. Wie aus der rechten Hälfte der Fig. 1 zu ersehen ist, kann der Anschluss sowohl mit Kabelschuhen 12 als auch mit Flachschienen, wie der rechte Anschluss zeigt, vorgenommen werden. Die Abdeckungen 8 haben U-Profil. Das Mittelstück dieses U-Profils deckt die Vorderseite, die Schenkel 13 des U-Profils decken die beiden Seiten eines Anschlusses ab und greifen somit zwischen die einzelnen Phasen. Die Verbindung der Abdeckungen 8 untereinander erfolgt über eine Schiene 14, die in Taschen 15 der Abdeckungen 8 eingeschoben ist. Der notwendig Abstand zwischen den einzelnen Abdeckungen kann durch eine Skala 16 auf der Schiene 14 entsprechend dem Phasenabstand festgelegt werden. Der Handhabung der Abdeckung 8 dienende Nasen 17 sind am Mittelteil der Abdeckung angeformt. In den Kunststoffhutmuttern 9 sind Schlitze 18 vorhanden, so dass die Abnahme der Abdekkungen mittels eines Schraubendrehers erfolgen kann. Die Schlitze 18 in den Kunststoffhutmuttern erstrecken sich lediglich über einen Teil des Durchmessers der Kunststoffhutmutter, um eine Grössenbegrenzung der Schraubendreherklinge zu erzwingen, so dass die Bruchgefahr der Kunststoffhutmutter verringert wird. Das Aufbringen kann − wie oben erwähnt − durch Aufrasten der Hutmuttern auf die Klemmenschrauben 10 erfolgen, hingegen erfolgt das Abnehmen durch Aufdrehen der Hutmuttern mittels eines Werkzeuges. Der Lichtbogenkammer 2 zugewandt sind an den Abdeckungen kleine Aussparungen 19, die dem Einbringen von Spannungsprüfspitzen dienen, so dass das Vorhandensein von Spannung am Schaltgerät auch bei aufgesetzter Abdeckung geprüft werden kann. Wie die Fig. 2 und 3 zeigen, sind an der Abdeckung quer zur Längsrichtung verlaufende Sollbruchkerben 20 vorgesehen, so dass die Länge der Abdeckung den gewünschten Erfordernissen kundenseitig angepasst werden kann. An der Eintrittsseite 21 für die Anschlussleitung sind bei Vorhandensein einer Wandung an dieser Stelle in dieser Wandung gemäss Fig. 5 ebenfalls Sollbruchkerben 22 vorhanden, die U-förmig verlaufen, so dass die Kabelaustrittsöffnung der Abdeckung dem jeweiligen Kabelquerschnitt angepasst werden kann. Beim Anschrauben der Kunststoffhutmutter 9 wird ein in der Abdeckung 8 vorgesehener Konus 25 auf die Kanten 26 der Mutter 11 gepresst, so dass sich ein Festsitz der Abdeckung in bezug auf die Zuleitung 4 ergibt. Die Ausbildung der Kunststoffhutmutter ist aus den Fig. 5 und 6 ersichtlich. Hier sind Längsschlitze 23 in Achsrichtung eingebracht, so dass sich elastische Zungen 27 ergeben. Diese elastischen Zungen 27 haben an der Aussenseite wulstförmige Vorsprünge 28, die hinter Hinterschneidungen 29 in der Abdeckung 8 greifen, d.h. die Kunststoffhutmuttern werden in die Abdeckung eingeschnappt und ermöglichen somit ein verliersicheres Befestigen in der Abdeckung. Die Zungen 27 ermöglichen weiterhin eine Schnellmontage der Abdeckung 8 durch Aufdrücken. Beim Verdrehen der Kunststoffhutmutter 9 bewirken die Zungen 27 weiterhin einen Zerstörschutz der Mutter; denn bei zu grossem Andrehmoment federn diese Zungen nach aussen auf. Um ein unbeabsichtigtes Lösen der Kunststoffhutmutter zu vermeiden, ist der Kopf der Kunststoffhutmutter 9 an der Auflagefläche 30 auf der Abdeckung 8 mit einer Verzahnung 24 versehen, wie dies Fig. 6 zeigt. An der Auflagestelle 30 kann eine entsprechende Verzahnung vorhanden sein.

**Patentansprüche**

1. Aus Isolierstoff bestehende Klemmenabdeckung (8), die über Klemmschrauben (10) mit der Klemme verbunden ist und deren Mittelteil das Vorderteil und dessen Seitenteile die Seiten der Klemmschraube (10) abdecken, wobei die Abdeckung (8) am freien Gewindeschaft der Klemmschraube (10) gehalten ist, dadurch gekennzeichnet, dass die Klemme als Anschluss (3, 4) eines mehrphasigen elektrischen Schaltgerätes (2) ausgebildet ist und die Abdeckung (8) U-Profil aufweist und den gesamten Anschluss (3, 4) phasenüberschlägeverhindernd abdeckt und dass die Abdeckung (8) über eine Kunststoffhutmutter (9) nur mit einem Werkzeug lösbar verbunden ist.

2. Abdeckung nach Anspruch 1, dadurch gekennzeichnet, dass das Mittelstück der Abdeckung (8) eine Aussparung (19) zur Einführung einer Spannungsprüfspitze hat.

3. Abdeckung nach Anspruch 1 oder 2, dadurch gekennzeichnet, dass die Abdeckungen (8) mehrerer nebeneinander in einer Ebene liegenden Anschlüsse (3, 4) auf einer quer zu den Anschlüssen (3, 4) verlaufenden Schiene (14) verschiebbar aufgereiht sind.

4. Abdeckung nach einem der vorhergehenden Ansprüche, dadurch gekennzeichnet, dass am Mittelteil der Handhabung der Abdeckung (8) dienende Nasen (17) angeformt sind.

5. Abdeckung nach einem der vorhergehenden Ansprüche, dadurch gekennzeichnet, dass quer zur Längsrichtung verlaufende Sollbruchkerben (20) vorgesehen sind.

6. Abdeckung nach einem der vorhergehenden Ansprüche, dadurch gekennzeichnet, dass bei Vorhandensein einer Wandung an der Eintrittsseite (21) für die Anschlussleitung (4) an der Innenseite dieser Wandung U-förmig verlaufende Sollbruchkerben (22) ausgebildet sind.

7. Abdeckung nach einem der vorhergehenden Ansprüche, dadurch gekennzeichnet, dass die Kunststoffhutmutter (9) an ihrem Umfang in Achsrichtung verlaufende Längsschlitze (23) hat.

8. Abdeckung nach einem der vorhergehenden Ansprüche, dadurch gekennzeichnet, dass der Kopf der Kunststoffhutmutter (9) an der Auflagefläche (30) auf der Abdeckung (8) mit einer Verzahnung (24) versehen ist.

## Claims

1. Terminal cover (8) which consists of insulating material and which is connected to the terminal via terminal screws (10) and whose central portion covers the front part of the terminal screw (10) and whose side portions cover the sides of the terminal screw (10), where the cover (8) is attached to the free threaded shank of the terminal screw (10), characterised in that the terminal represents the connection point (3, 4) of a multiphase electrical switching device (2) and the cover (8) has a U-shaped profile and covers the entire connection (3, 4) so as to prevent phase sparkovers, and that the cover (8) is detachably connected via a synthetic cap nut (9) with only one tool.

2. Cover as claimed in claim 1, characterised in that the central portion of the cover (8) has a cutout (19) through which a voltage testing probe may be introduced.

3. Cover as claimed in claim 1 or 2, characterised in that the covers (8) of a plurality of terminals (3, 4) arranged one beside another in one plane are movably mounted in a line on a bar (14) extending transversely to the terminals (3, 4).

4. Cover as claimed in one of the preceding claims, characterised in that projections (17) which facilitate the handling of the cover (8) are attached to the central portion.

5. Cover as claimed in one of the preceding claims, characterised in that safety grooves (20) are provided which run transversely to the longitudinal direction.

6. Cover as claimed in one of the preceding claims, characterised in that where a wall is provided at the inlet end (21) for the connection line (4), U-shaped safety grooves (22) are formed on the inside of this wall.

7. Cover as claimed in one of the preceding claims, characterised in that at its periphery the synthetic cap nut (9) possesses elongate slots (23) which extend in the axial direction.

8. Cover as claimed in one of the preceding claims, characterised in that at the bearing surface (30) on the cover (8) the head of the synthetic cap nut (9) is provided with toothing (24).

## Revendications

1. Couvre-borne constitué par une matière isolante, qui est relié par des bornes à vis (10) à la borne, et dont la partie médiane recouvre la partie antérieure et dont les parties latérales recouvrent les côtés de la borne à vis (10), le couvre-borne (8) étant maintenu au niveau de la tige filetée libre de la borne à vis, caractérisé par le fait que la borne est réalisée sous la forme d'une connexion (3, 4) d'un appareil électrique de commutation multiphase (2), et le couvre-borne (8) présentant un profil en U et recouvrant la totalité de la connexion (3, 4) de manière à empêcher une décharge entre phases, et que le couvre-borne (8) est relié à l'aide d'un écrou à chapeau (9) en matière plastique, de manière à ne pouvoir être détaché qu'avec un outil.

2. Couvre-borne selon la revendication 1, caractérisé par le fait que la partie médiane du couvre-borne (8) comporte une ouverture (19) pour l'introduction d'une pointe de contrôle de la tension.

3. Couvre-borne selon la revendication 1 ou 2, caractérisé par le fait que les couvre-bornes (8) de plusieurs connexions (3, 4) adjacentes et se situant dans un même plan sont susceptibles d'être déplacés sur un rail (14) s'étendant transversalement par rapport aux connexions (3, 4).

4. Couvre-borne selon l'une des revendications précédentes, caractérisé par le fait que sur la partie médiane sont conformés des becs (17) qui servent à la manipulation du couvre-borne (8).

5. Couvre-borne selon l'une des revendications précédentes, caractérisé par le fait que sont prévues des encoches de rupture (20) qui s'étendent transversalement à la direction longitudinale.

6. Couvre-borne selon l'une des revendications précédentes, caractérisé par le fait que dans le cas de la présence d'une paroi au niveau du côté entrée (21) pour le conducteur de connexion (4), des encoches de rupture (22) qui s'étendent selon une forme en U, sont prévues sur le côté intérieur de cette paroi.

7. Couvre-borne selon l'une des revendications précédentes, caractérisé par le fait que l'écrou à chapeau en matière plastique (9) comporte sur sa périphérie des fentes longitudinales (23) s'étendant dans la direction de l'axe.

8. Couvre-borne selon l'une des revendications précédentes, caractérisé par le fait que la tête de l'écrou à chapeau en matière plastique (9) est pourvue d'une denture (29) sur la face d'appui (30) du couvre-borne (8).

0 017 163

FIG 1

FIG 4

FIG 5

FIG 6

FIG 2

FIG 3